# EUROPEAN PATENT APPLICATION

(11) **EP 3 404 623 A1**
(43) Date of publication of application: **21.11.2018**
(21) Application number: 16884873.7
(22) Date of filing: 12.01.2016
(51) Int. Cl.: G06T 19/00, H04N 13/04

(54) **IMAGE DISPLAY DEVICE**

(71) Applicant: Suncorporation, Konan-shi Aichi 483-8555 (JP)
(72) Inventor: IWATA Jun, Konan-shi Aichi 483-8555 (JP)
(74) Representative: Rupprecht, Kay
(86) International application number: PCT/JP2016/050670
(87) International publication number: WO 2017/122270

(57) **Abstract**

A controller 30 is configured to specify spatial information based on a first calibration image acquired from a first camera 12 and a second calibration image acquired from a second camera 14 provided at a different position from the first camera 12, and specifies a position and a posture of an image display device 2 in a space surrounding the image display device 2 based on the spatial information, a first captured image acquired from the first camera 12, a second captured image acquired from the second camera 14, and a posture of the image display device 2 detected by a sensor 20. Further, the controller 30 is configured to create an object image representing an object corresponding to a predetermined position in the space, and causes a display unit 10 to display a screen showing a state in which the object image is arranged at the predetermined position in the space in a case where the predetermined position is included in a specific range.

## Description

### TECHNICAL FIELD

The technique disclosed herein related to an image display device configured to be used by being worn on a head of a user.

### BACKGROUND ART

For example, the pamphlet of WO 2012/033578 A1 (hereinbelow termed Patent Literature 1) describes a camera system that measures a physical distance to an object using light. This camera system irradiates patterned light (for example, lattice-patterned or dot-patterned light) to a target object. When the light is irradiated to a surface of the object, deformations occur in the pattern of the light according to a shape of the object. By capturing and analyzing the deformed pattern by a visible light camera, the physical distance between the system and the object is calculated.

### SUMMARY OF INVENTION

### TECHNICAL PROBLEM

On the other hand, an image display device used by being worn on a head of a user is known. This type of image display device is provided with a display unit that displays an image of a range corresponding to a view of the user (that is, a reality image), and a computer that composes an object image representing an object related to an image to be displayed on the display unit to the reality image being displayed on the display unit and causes the same to be displayed. As such, a technique which enhances and expands the world of reality perceivable to a human by using a computer is known as Augmented Reality (AR).

An application of the technique of Patent Literature 1 to such an image display device may be expected. In this case, the image display device would be provided with a lighting device and a visible light camera of Patent Literature 1. Further, the image display device irradiates patterned light using the lighting device onto its surrounding object, captures the pattern of the light irradiated by the visible light camera (that is, deformed pattern), and analyzes the same using the computer. By doing so, the computer calculates the physical distance between the image display device and its surrounding object, and specifies a position and a posture of the image display device in its surrounding space. As a result, the computer can cause the object image to be displayed at an appropriate position on the display unit by using the position and the posture of the image display device in its surrounding space.

However, even in the case where the technique of Patent Literature 1 is applied to the image display device, there is a case where the light irradiated by the lighting device is affected by light from another light source (such as sunlight, indoor room lighting, etc.), in which case the physical distance to the surrounding object may not be calculated appropriately, and there is a risk that the position and the posture of the image display device in its surrounding space cannot be specified appropriately.

The teachings herein disclose a technique that enables a position and a posture of an image display device in it surrounding space to be appropriately specified.

An image display device disclosed herein may be configured to be used by being worn on a head of a user. The image display device may comprise: a display unit; a first camera configured to capture a specific range corresponding to a range of a view of the user; a second camera provided in a different position from the first camera, and configured to capture the specific range; a sensor configured capable of detecting a posture of the image display device; and a controller. The controller may be configured to: specify spatial information for specifying features of a space around the image display device based on a first calibration image acquired from the first camera and a second calibration image acquired from the second camera; specify a position and a posture of the image display device in the space based on the spatial information, a first captured image acquired from the first camera, a second captured image acquired from the second camera, and the posture of the image display device detected by the sensor; create an object image representing an object corresponding to a predetermined position in the space; and cause the display unit to display a first display screen showing a state where the object image is arranged at the predetermined position in the space in a first case where the predetermined position is included in the specific range.

According to the above configuration, the image display device specifies the spatial information based on the first calibration image acquired from the first camera and the second calibration image acquired from the second camera provided at the different position from the first camera, and further specifies the position and the posture of the image display device in the space based on the spatial information, the first captured image acquired from the first camera, the second captured image acquired from the second camera, and the posture of the image display device detected by the sensor. Each of the elements, namely the first calibration image, the second calibration image, the first captured image, the second captured image, and the posture of the image display device detected by the sensor, is robust to an influence of changes in a surrounding environment of the image display device. Due to this, according to the above configuration, the image display device can appropriately specify the position and the posture of itself within the surrounding space.

Here, the "first captured image" may be a same image as the "first calibration image" or an image different therefrom. Similarly, the "second captured image" may be a same image as the "second calibration image" or an image different therefrom. The "object image" includes both still images and video images.

A controlling method, a computer program, and a computer-readable recording medium storing the computer program for implementing the image display device as above are also novel and useful.

### BRIEF DESCRIPTION OF DRAWING

FIG. 1 shows an outer appearance of an image display device of a first embodiment.
FIG. 2 shows a configuration of the image display device of FIG. 1.
FIG. 3 shows a flowchart of a display device process.
FIG. 4 shows an example of a calibration screen.
FIG. 5 shows an example of a real-time process.
FIG. 6 shows an example of a menu object image.
FIG. 7 shows an example in which a guide image is displayed together with the menu object image.
FIG. 8 virtually shows an example of a display position of each object in a space.
FIG. 9 shows an example in which the guide image is displayed together with a globe object image.
FIG. 10 shows an outer appearance of an image display device of a second embodiment.

Primary features of embodiments described below will be listed. The technical elements described herein are each independent technical elements, which exhibits technical usefulness solely or in various combinations, and are not limited to combinations recited in the claims as originally filed.

(Feature 1) The controller may further be configured to change a display of the object image in the first display screen in response to an operation performed by the user while the first display screen is displayed on the display unit.

According to this configuration, the object image in the first display screen can be displayed in various types of displays according to the operation performed by the user.

(Feature 2) The operation may include a gesture performed by the user in the specific range.

According to this configuration, the user can move his body to perform a gesture without performing operation on an input unit such as an input key to cause the object image in the first display screen to be displayed appropriately according to the operation performed by the user. The user can change the display of the object image intuitively.

(Feature 3) The display unit may be a transparent display through which surroundings are visible to the user when the user wears the image display device, and the controller may be configured to display the first display screen on the display unit by causing the display unit to display the object image in the first case.

According to this configuration, the user can see the first display screen in which the object image is composed to a real-life view which can be seen through the display unit.

(Feature 4) The display unit may be a light-shielding display which blocks a view of the user when the user wears the image display device. The controller may be configured to: cause the display unit to display at least one of the first captured image and the second captured image; and cause the display unit to display the first display screen by causing the display unit to display the object image with the at least one of the first captured image and the second captured image in the first case.

According to this configuration, the user can see the first display screen in which the object image is composed to the at least one of the first captured image and the second captured image.

(Feature 5) The controller may be configured to cause the display unit to display a second display screen including a guide image that indicates a direction of the predetermined position in a second case where the predetermined position is not included in the specific range.

According to this configuration, by seeing the guide image, the user can acknowledge the predetermined position where the object image is displayed.

### (First Embodiment)

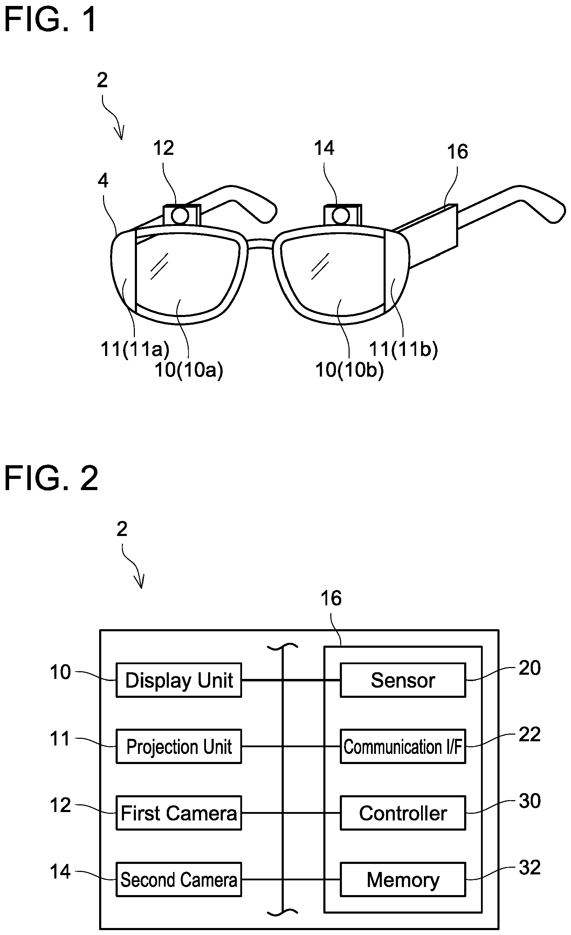

### (Configuration of image display device 2; FIG. 1, FIG. 2)

An image display device 2 shown in FIG. 1 is an image display device used by being worn on a head of a user (a so-called head-mount display). The image display device 2 includes a support body 4, display units 10a, 10b, projection units 11a, 11b, a first camera 12, a second camera 14, and a control box 16.

The support body 4 is a member in a shape of a glass frame. The user can wear the image display device 2 on the head by wearing the support body 4 as one would wear glasses.

The display units 10a, 10b are transparent display unit members, respectively. When the user wears the image display device 2 on the head, the display unit 10a is arranged at a position facing a right eye of the user and the display unit 10b is arranged at a position facing a left eye of the user. Hereinbelow, the left and right display units 10a, 10b may collectively be called a display unit 10. In this embodiment, the user can see his surroundings through the display unit 10.

The projection units 11a, 11b are members configured to project images on the display units 10a, 10b. The projection units 11a, 11b are provided at lateral sides of the display units 10a, 10b. Hereinbelow, the left and right projection units 11a, 11b may collectively be called a projection unit 11. In this embodiment, the projection unit 11 projects a predetermined object image on the display unit 10 in accordance with an instruction from a controller 30. Due to this, the user can see an object in the real world and/or a space and the object image as if object image is composed over the object in the real world visible to the user and/or at a predetermined position in the space through the display unit 10. Hereinbelow, in this description, an explanation of operations of the projection unit 11 will eb omitted when explaining about the controller 30 causing the display unit 10 to display a desired image by instructing projection of this image to the projection unit 11, and this may be expressed simply as "the controller 30 causes the display unit 10 to display the desired image".

The first camera 12 is a camera arranged on the support body 4 at a position above the display unit 10a (that is, at a position corresponding to the right eye of the user). On the other hand, the second camera 14 is a camera arranged on the support body 4 at a position above the display unit 10b (that is, at a position corresponding to the left eye of the user). Each of the first camera 12 and the second camera 14 allows to capture a range corresponding to a range of view of the user wearing the image display device 2 (hereinbelow termed a "specific range") from different angles.

The control box 16 is a box attached to a part of the support body 4. The control box 16 accommodates respective elements functioning as a control system of the image display device 2. Specifically, as shown in FIG. 2, the control box 16 accommodates a sensor 20, a communication interface 22, the controller 30, and a memory 32. Hereinbelow, an interface is denoted as "I/F".

The sensor 20 is a triaxial acceleration sensor. The sensor 20 detects acceleration along three axes being X, Y, and Z axes. The controller 30 is configured capable of specifying a posture and a motion state of the image display device 2 using detection values from the sensor 20.

The communication I/F 22 is an I/F configured to execute wireless communication with an external device (such as a terminal device having a communication function).

The controller 30 is configured to execute various processes according to programs stored in the memory 32. Contents of the processes executed by the controller 30 will be described later in detail. Further, as shown in FIG. 2, the controller 30 is electrically connected to the display unit 10, the projection unit 11, the first camera 12, the second camera 14, the sensor 20, the communication I/F 22, and the memory 32, and is configured to control operations of these elements.

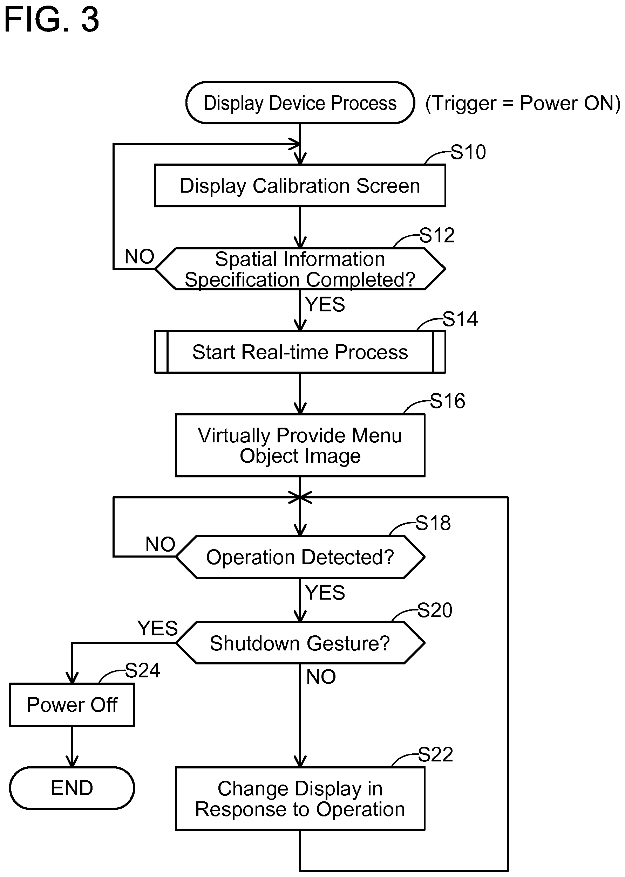

The memory 32 stores various programs. Further, the memory 32 also has an area for storing various types of information created by the processes of the controller 30 (such as a display device process (FIG. 3) to be described later).

### (Display device process; FIG. 3)

A display device process executed by the controller 30 of the image display device 2 of the present embodiment will be described with reference to FIG. 3. When the user wears the image display device 2 on his head and turns on a power of the image display device 2, the controller 30 initiates the display device process of FIG. 3.

In S10, the controller 30 displays a predetermined calibration screen on the display unit 10. The calibration screen is a screen for allowing the user to perform calibration. Here, "calibration" is a process for specifying spatial information (that is, calibration data) for specifying features in a surrounding space of the image display device 2. Further, the "features in the surrounding space of the image display device 2" includes, for example, various types of information for characterizing an indoor space in a case where the image display device 2 exists indoors, such as a distance between a wall and the device, a direction of the wall, a distance between a ceiling and the device, a height of the ceiling, an area of a floor, a position of furniture, a distance to the furniture, and the like. On the other hand, for example, in a case where the image display device 2 exists outdoors, the "features in the surrounding space of the image display device 2" includes various types of information for characterizing the surrounding space of the device, such as a distance to a target object in the surroundings.

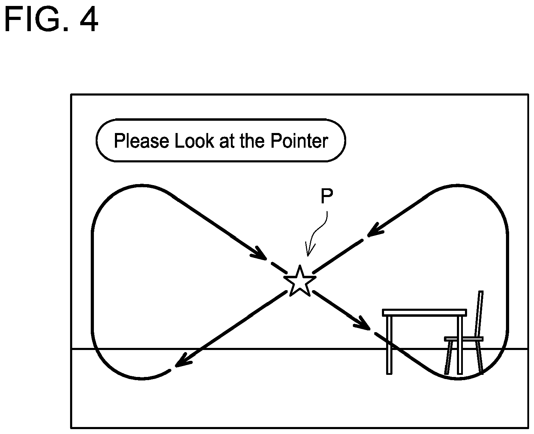

FIG. 4 shows an example of the calibration screen. As shown in the example of FIG. 4, the calibration screen includes a pointer P and a message prompting the user to keep looking at the pointer. The controller 30 moves the pointer P within the display unit 10 so that an entirety of the surrounding space of the image display device 2 can be included in view by the user following the pointer P with his eyes.

In subsequent S12, the controller 30 monitors completion of the specification of the spatial information. As aforementioned, by the user performing an operation to follow the pointer P with his eyes (that is, the user moves the head according to a motion of the pointer P) after the calibration screen (see FIG. 4) is displayed on the display unit 10 in S10, plural directions of the surrounding space are captured by the first camera 12 and the second camera 14. At this occasion, the controller 30 acquires a first calibration image being an image of the specific range (that is, the range corresponding to the range of view of the user) captured by the first camera 12 from the first camera 12, and acquires a second calibration image being an image of the specific range captured by the second camera 14 from the second camera 14. The controller 30 specifies feature points that are common to the first and second calibration images, and executes triangulation to calculate distances between the feature points and the image display device 2. Further, the controller 30 can also specify a coordinate of a position of each feature point with a coordinate of an initial position of the pointer P as a reference. The controller 30 performs similar processes for each of the plural feature points existing in all directions surrounding the image display device 2. In a case where a distance to the feature point and the coordinate of the feature point are specified for each of the plural feature points existing in all directions surrounding the image display device 12, the controller 30 determines YES in S12 and proceeds to S14. That is, the "spatial information for specifying the features of the surrounding space of the image display device 2" in S12 means the distances to the respective feature points and the coordinates of these feature points.

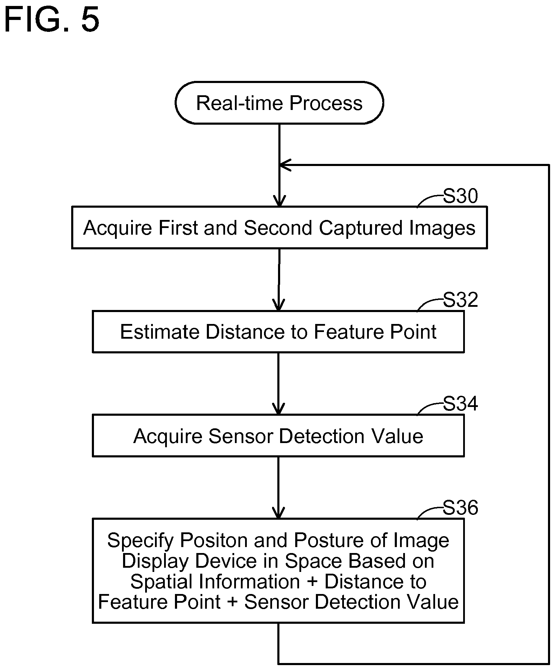

In S14, the controller 30 initiates a real-time process (see FIG. 5). When the real-time process is initiated in S14, the controller 30 executes the real-time process repeatedly until the power of the image display device 2 is turned off. After having initiated the real-time process in S14, the controller 30 proceeds to S16. Hereinbelow, contents of the real-time process will be described with reference to FIG. 5.

### (Real-time process; FIG. 5)

In S30 of FIG. 5, the controller 30 acquires a first captured image from the first camera 12, this image being an image of the specific range captured by the first camera 12 at a timepoint of S30, and acquires a second captured image from the second camera 14, this image being an image of the specific range captured by the second camera 14 at the timepoint of S30. That is, the first and second captured images acquired in S30 are both real-time captured images corresponding to the current range of view of the user.

In subsequent S32, the controller 30 calculates a distance between a specified feature point, which is found commonly in the first and second captured images, and the image display device 2. The "feature point" mentioned herein is for example one of the plural feature points included in the spatial information (case of YES to S12 of FIG. 3). The distance between the feature point and the image display device 2 is calculated by executing triangulation using the first and second captured images similar to the case described above.

In subsequent S34, the controller 30 calculates the posture of the image display device 2 at this timepoint based on the detection values of the sensor 20. Specifically, the controller 30 calculates tilt angles (θx, θy, θz) of X-axis, Y-axis, and Z-axis in a case of setting a direction of gravity as 0° based on the detection values of the sensor 20 (that is, acceleration in each axis direction of the X-axis, Y-axis, and Z-axis), and calculates the posture of the image display device 2 (that is, its tilt relative to a horizontal plane) at this timepoint of S10 based on these tilt angles.

In subsequent S36, the controller 30 uses the spatial information specified in the case of YES in S12 of FIG. 3, the distances to the feature points calculated in S32, and the posture of the image display device 2 calculated in S34 to specify a position and a posture of the image display device 2 in the space where the image display device 2 exists.

After completing S36, the controller 30 returns to S30 and executes the respective processes of S30 to S36 repeatedly. That is, the controller 30 can specify the position and the posture of the image display device 2 in the space where the image display device 2 exists on real-time basis by executing the processes of S30 to S36 repeatedly.

### (Continuation of display device process: from S16 of FIG. 3)

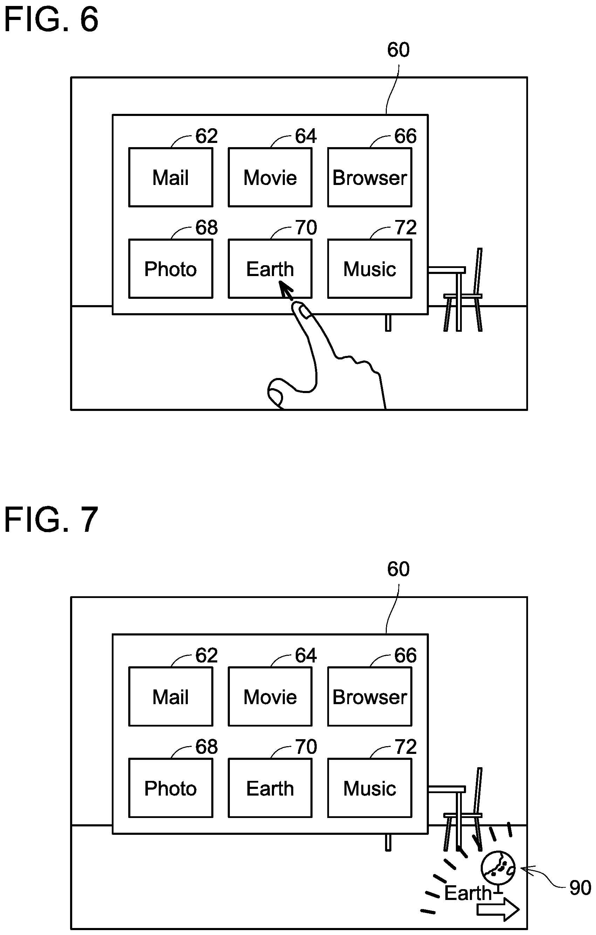

As above, when the controller 30 initiates the real-time process (see FIG. 5) in S14 of FIG. 3, it proceeds to S16. In S16, the controller 30 creates a menu object image representing a main menu object, and corresponds it to a predetermined position. In other words, the controller 30 creates the menu object image and arranged it virtually at the predetermined position. Here, "virtually arranging the menu object image at the predetermined position" means corresponding the menu object image to the predetermined position so that a screen in a state of having the menu object image arranged at the predetermined position in the space is displayed on the display unit 10 in a case where the specific range (that is, captured ranges of the first camera 12 and the second camera 14) includes the predetermined position. In S16, the controller 30 designates a position in front of the view of the user as the predetermined position and virtually arranges the menu object image. Due to this, at a timepoint upon the process of S16, the specific range (that is, the range of view of the user) includes the predetermined position. Due to this, as shown in FIG. 6, the display unit 10 displays the screen in the state of having the menu object image 60 indicating the menu object arranged at the predetermined position in the space. In this embodiment, since the display unit 10 is a transparent display, the user can see a display in which the menu object image 60 is composed to a real-life component (that is, a sight in a room) visible to the user through the display unit 10.

As shown in FIG. 6, the menu object image 60 represents the main menu. The menu object image 60 displays six icons 62 to 72 which can be selected. Each icon corresponds to an application. For example, the icon 62 indicates a mail application, the icon 64 indicates a movie application, the icon 66 indicates a browser application, the icon 68 indicates a photo application, the icon 70 indicates a virtual glove application, and the icon 72 indicates a music application. The user can activate an application corresponding to a desired icon by performing a gesture to touch the desired icon in the specific range.

In subsequent S18, the controller 30 monitors detection of the user operation in the specific range. Here, the "user operation in the specific range" includes various operations such as the gesture that the user performs to the object image such as the menu object image (for example, a gesture to instruct moving the image or changing a size thereof, a gesture to instruct terminating display of the image, a gesture to select an icon, a gesture to instruct turning the power of the image display device 2 off, etc.), a movement of the user in the space, changing a direction of the view of the user, and the like. In S18, the controller 30 determines whether or not the user performed the operation in the specific range based on the first captured image from the first camera 12, the second captured image from the second camera 14, and the detection values from the sensor 20. When the user having performed the operation in the specific range is detected, the controller 30 determines YES in S18 and proceeds to S20.

In S20, the controller 30 determines whether or not the operation performed by the user is the predetermined gesture to instruct turning the power of the image display device 2 off (hereinbelow termed a "shutdown gesture"). When the operation performed by the user is determined as being the predetermined shutdown gesture, the controller 30 determines YES in S20, proceeds to S24, and turns off the power of the image display device 2. In this case, the display device process of FIG. 3 is completed. On the other hand, when the operation performed by the user is determined as being an operation other than the predetermined shutdown gesture, the controller 30 determines NO in S20 and proceeds to S22.

In S22, the controller 30 executes a process corresponding to the operation. For example, in a case where the operation performed by the user is the operation to move a display position of the menu object image 60 (see FIG. 6), the controller 30 changes the display position of the menu object image 60 in accordance with the user's operation. In this case, the screen in a state where the menu object image 60 is arranged at a position after the change is displayed on the display unit 10. Further, for example, as shown in FIG. 6, in a case where the operation performed by the user is an operation to select the icon 70 of the virtual globe application in the menu object image 60 (for example, an operation to touch the icon 70), the controller 30 activates the virtual globe application in accordance with the user's operation. In this case, the controller 30 creates a globe object image 80 indicating a virtual globe and virtually arranges it at a predetermined position (that is, to the right as seen from the user) (see FIGS. 7 to 9). In this case, as shown in FIG. 7, the display unit 10 further displays a guide image 90 indicating that the globe object image 80 is virtually arranged to the right as seen from the user.

The controller 30 returns to S18 after completing S22, and monitors the user's operation being performed again. Due to this, each time the user performs an operation such as performing a gesture in the specific range or changing the direction of the user's view, the controller 30 changes display positions and manners of the object images and the guide image displayed in the display unit 10 in accordance with the operation. The controller 30 repeatedly executes the respective processes of S18 to S22 until the shutdown gesture is performed (YES to S20).

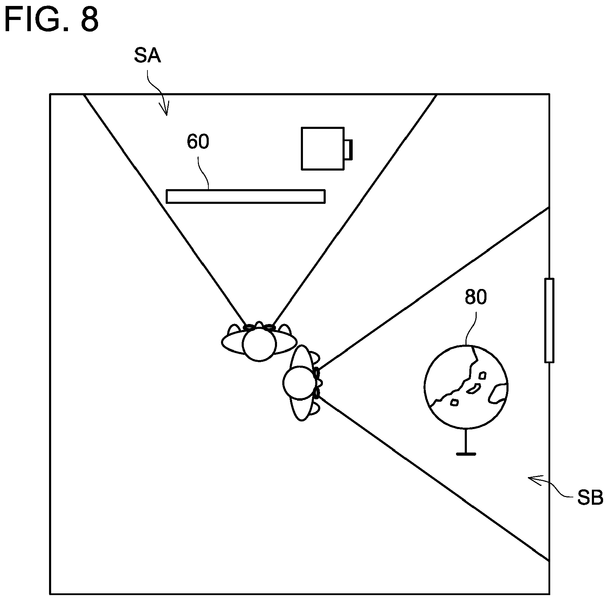

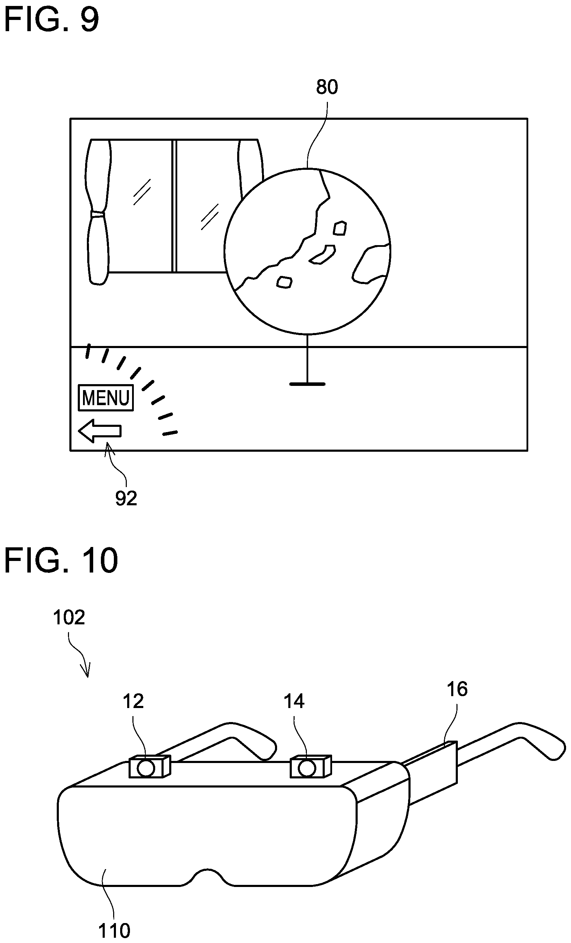

Here, transition of the screen displayed on the display unit 10 will be described in further detail. In an example of FIG. 7 above, the display unit 10 is displaying, in addition to the menu object image 60, the guide image 90 indicating that the globe object image 80 is virtually arranged to the right as seen from the user. FIG. 8 schematically shows a positional relationship of an arranged position of the menu object image 60 and an arranged position of the globe object image 80 in the space under this situation. As shown in FIG. 8, only the arranged position of the menu object image 60 is included in a specific range SA corresponding to the range of view of the user during when the screen of FIG. 7 is displayed on the display unit 10, and the arranged position of the globe object image 80 is not included therein. Further, the arranged position of the globe object image 80 is on the right as seen from a position of the user. When the user shifts his view rightward and the arranged position of the globe object image 80 comes to be included in a specific range SB (YES in S18 of FIG. 5), as shown in FIG. 9, the globe object image 80 and a guide image 92 indicating that the menu object image 60 is virtually arranged to the left as seen from the user are displayed on the display unit 10 (S22).

The configuration and operation of the image display device 2 of the present embodiment were described above. As aforementioned, in the present embodiment, the controller 30 specifies the spatial information (YES in S12 of FIG. 3) based on the first calibration image acquired from the first camera 12 and the second calibration image acquired from the second camera 14 provided at the different position from the first camera 12, after which it specifies the position and the posture of the image display device 2 in the surrounding space of the image display device 2 (S36 of FIG. 5) based on the spatial information, the first captured image acquired from the first camera 12, the second captured image acquired from the second camera 14, and the posture of the image display device 2 detected by the sensor 20. Each of the elements, namely the first calibration image, the second calibration image, the first captured image, the second captured image, and the posture of the image display device 2 detected by the sensor 20, is robust to an influence of changes in a surrounding environment of the image display device 2 (such as light intensity). Due to this, according to the above configuration, the image display device 2 can appropriately specify the position and the posture of itself within the surrounding space. Due to this, according to the image display device 2 of the present embodiment, the object image (such as the menu object image 60) can be displayed at an appropriate position on the display unit 10 by using information on the appropriately-specified position and posture of itself (see FIG. 6).

Further, in the present embodiment, the controller 30 can change the display of the menu object image 60 in accordance with the operation performed by the user (such as the instruction to change the display position, etc.) while the screen in which the menu object image 60 is being arranged within the space is being displayed on the display unit 10 (see FIG. 6). Due to this, the menu object image 60 in the screen can be displayed in an appropriate manner in accordance with the operation performed by the user. Further, examples of the above operation include the gesture that the user performs in the specific range. Due to this, the user can move his body to perform the gesture without performing operation on an input unit such as an input key to cause the menu object image 60 in the screen being displayed in the display unit 10 to be displayed in the appropriate manner according to the operation performed by the user. The user can change the display of the menu object image 60 intuitively.

Further, in the present embodiment, the display unit 10 is a transparent display, and the surroundings are visible to the user through the display unit 10 upon when the user wears the image display device 2. In S16 of FIG. 3, the controller 30 causes the display unit 10 to display the screen in a manner by which the menu object image 60 is composed over the real-life image which is visible through the display unit 10. Due to this, the user can see the screen in the manner by which the menu object image 60 is composed over the real-life view which can be seen through the display unit 10.

Further, in the present embodiment, the controller 30 causes the display unit 10 to display the screen including the guide image 90 indicating the direction of the arranged position of the globe object image 80 as shown in FIG. 7 in the case where the arranged position of the globe object image 80 is not included in the specific range corresponding to the range of view of the user. That is, the user can acknowledge the position where the globe object image 80 is displayed by seeing the guide image 90.

### (Correspondence Relationships)

The screen in the manner in which the menu object image 60 is composed over the real-life image which is visible through the display unit 10 as shown in FIG. 6 is an example of a "first display screen". The menu object image 60 is an example of an "object image". The position where the menu object image 60 is virtually arranged is an example of a "predetermined position". Further, the screen including the guide image 92 shown in FIG. 9 is an example of a "second display screen".

### (Second Embodiment)

An image display device 102 according to a second embodiment will be described with reference to FIG. 10 with explanation primarily on points thereof that differ from the first embodiment. The present embodiment differs from the first embodiment in that a display unit 110 is a light-shielding display, and when the user wears the image display device 2, the view of the user is blocked. Other constituent elements are substantially same as those of the first embodiment.

As aforementioned, in the present embodiment, the display unit 110 is the light-shielding display, and as such, when the power of the image display device 2 is turned on, the controller 30 causes an image captured by the first camera 12 to be displayed in the region facing the right eye of the user and causes an image captured by the second camera 14 to be displayed in the region facing the left eye of the user. Then, for example, in a case where the arranged position of the menu object image 60 is included in the specific range, the controller 30 causes the display unit 10 to display images in which the menu object image 60 is composed over the first and second captured images.

The embodiments have been described in detail above, however, these are mere exemplary indications and thus do not limit the scope of the claims. The technique described in the claims includes modifications and variations of the specific examples presented above. For example, variants as below may be employed.
(Variant 1) In the second embodiment as above, the controller 30 causes the image captured by the first camera 12 to be displayed in the region facing the right eye of the user and causes the image captured by the second camera 14 to be displayed in the region facing the left eye of the user. Not being limited hereto, the controller 30 may display only one of the images captured by the first camera 12 and the second camera 14 on the display unit 10. Further, the controller may display an image in which the images captured by the first camera 12 and the second camera 14 are composed on the display unit 10.
(Variant 2) In the respective embodiments as above, the controller 30 monitors the detection of the user operation in the specific range in S18 of FIG. 3, however, the "user operation" referred hereof is not limited to the gesture which the user performs on the object image such as the menu object image, the movement of the user within the space, and the changes in the direction of the view of the user, and may include an operation in which the user uses the input unit (input key, etc.) to input the operation. In this case, the image display device 2 may further include the input unit.
(Variant 3) In the respective embodiments as above, the controller 30 initiates the real-time process (S14) after having executed calibration (YES in S10, S12 of FIG. 3). Not being limited hereto, the controller 30 may initiate the real-time process together with the execution of the calibration. The "first calibration image" and the "first captured image" both refer to images captured by the first camera (image capturing device), and the "first calibration image" and the "first captured image" may be an identical image. Similarly, the "second calibration image" and the "second captured image" may be an identical image. Further, the calibration may be re-executed during execution of the real-time process or the like. For example, the calibration may be re-executed in a case where the user changed a position where the image display device 2 was worn (that is, a case where he takes the image display device 2 off of the head and put it back on again).
(Variant 4) In the respective embodiments as above, both the image display devices 2, 102 have a support frame that is substantially in the shape of glasses, and they can be worn on the head of the user similar to how the glasses are worn. Not being limited to this, the image display device may have an arbitrary support frame, such as in a hat shape, a helmet shape, and the like so long as it is wearable on the head of the user.
(Variant 5) The image display device may be configured by attaching the first camera 12, the second camera 14, and the control box 16 on an eyewear generally used for an orthoptic purpose or for eye protection (such as glasses, sunglasses, etc.). In this case, lens portions of the eyewear may be used as the display unit.
(Variant 6) In the respective embodiments as above, the respective object images such as the menu object image 60 (FIG. 6) are all displayed as still images. Not being limited to this, the respective object images may be displayed as motion images (that is, images in which at least a part thereof operates in animation display).

Further, the technical features described in the description and the drawings may technically be useful alone or in various combinations, and are not limited to the combinations as originally claimed. Further, the technique described in the description and the drawings may concurrently achieve a plurality of aims, and technical significance thereof resides in achieving any one of such aims.

## Claims

1. An image display device configured to be used by being worn on a head of a user, the image display device comprising:
a display unit;
a first camera configured to capture a specific range corresponding to a range of a view of the user;
a second camera provided in a different position from the first camera, and configured to capture the specific range;
a sensor configured capable of detecting a posture of the image display device; and
a controller,
wherein the controller is configured to:
specify spatial information for specifying features of a space around the image display device based on a first calibration image acquired from the first camera and a second calibration image acquired from the second camera;
specify a position and a posture of the image display device in the space based on the spatial information, a first captured image acquired from the first camera, a second captured image acquired from the second camera, and the posture of the image display device detected by the sensor;
create an object image representing an object corresponding to a predetermined position in the space; and
cause the display unit to display a first display screen showing a state where the object image is arranged at the predetermined position in the space in a first case where the predetermined position is included in the specific range.

2. The image display device as in claim 1, wherein
the controller is further configured to change a display of the object image in the first display screen in response to an operation performed by the user while the first display screen is displayed on the display unit.

3. The image display device as in claim 2, wherein
the operation includes a gesture performed by the user in the specific range.

4. The image display device as in any of claims 1 to 3, wherein
the display unit is a transparent display through which surroundings are visible to the user when the user wears the image display device, and
the controller is configured to display the first display screen on the display unit by causing the display unit to display the object image in the first case.

5. The image display device as in any of claims 1 to 3, wherein
the display unit is a light-shielding display which blocks a view of the user when the user wears the image display device, and
the controller is configured to:
cause the display unit to display at least one of the first captured image and the second captured image; and
cause the display unit to display the first display screen by causing the display unit to display the object image with the at least one of the first captured image and the second captured image in the first case.

6. The image display device as in any of claims 1 to 5, wherein
the controller is configured to cause the display unit to display a second display screen including a guide image that indicates a direction of the predetermined position in a second case where the predetermined position is not included in the specific range.
